# EUROPÄISCHE PATENTSCHRIFT

(11) **EP 0 345 519 B1**
(45) Veröffentlichungstag und Bekanntmachung des Hinweises auf die Patenterteilung: **03.08.1994**
(21) Anmeldenummer: 89109174.6
(22) Anmeldetag: 22.05.1989
(51) Int. Cl.: G02B 6/38

(54) **Zweiteiliger Steckverbinder für Lichtwellenleiter**
Two-piece plug-in connector for lightguides
Connecteur à fiches en deux pièces pour guides d'ondes lumineuses

(30) Priorität: 09.06.1988 DE 3819621
(43) Veröffentlichungstag der Anmeldung: 13.12.1989
(73) Patentinhaber: ERNI ELEKTROAPPARATE GMBH, D-73099 Adelberg (DE)
(72) Erfinder: Lappöhn Jürgen, 7326 Heiningen (DE); Czeschka Franz, 7324 Rechberghausen (DE)
(74) Vertreter: Seemann, Norbert W., Dipl.-Ing.

(56) Entgegenhaltungen:
- DE-A- 2 701 436
- DE-A- 3 725 677
- US-A- 3 982 815
- PATENT ABSTRACTS OF JAPAN Band 4, Nr. 8 (E-166), 22. Januar 1980 & JP-A-54 148 544
- PATENT ABSTRACTS OF JAPAN Band 11, Nr. 62 (P-551), 25. Februar 1987 & JP-A-61 226 714

## Beschreibung

Die Erfindung bezieht sich gemäß dem Oberbegriff des Hauptanspruches auf einen zweiteiligen Steckverbinder für Lichtwellenleiter mit Mitteln zum selbsttätigen, axialen Ausrichten von zwei die Enden der Lichtwellenleiter haltenden, zylindrischen Steckerstiften in einer mit Längsschlitzen versehenen, innen zylindrischen Zentrierhülse, wobei einer der Steckerstifte in Gehäuselängsrichtung federnd gelagert ist.

Aus der DE-AS 25 24 845 ist eine Lichtleiterkupplung zur Kupplung zweier Lichtwellenleiter bekannt, bei der die Lichtwellenleiter mit ihren optischen Achsen zueinander und ihren Anschlußflächen aneinanderliegend durch eine, zwei konusförmige Endabschnitte mit in diesen mehrfach befindlichen, von den Stirnseiten aus nach innen gerichteten, nicht durchgehenden Längsschlitzen aufweisende Spannhülse gehaltert und ausgerichtet sind, sowie im Zusammenwirken mit einem Verbindungsteil sowie beidseitig jeweils vorhandener Überwurfmutter und mit dem Konusabschnitt korrespondierendem Innenrohr gespannt werden.

Nachteilig ist hier, daß die auf die die Endabschnitte der Lichtwellenleiter aufnehmenden Anschlußkörper einwirkende Spannkraft über den gesamten Einspannbereich der besagten Anschlußkörper nicht gleichmäßig stark wirkt. Die spannende Bewegung der Spannbacken der Spannhülse ist in der senkrechten Ebene der aneinander anliegenden Anschlußflächen der sehr genau zu positionierenden Lichtwellenleiter am geringsten; entfernt von diesen ist sie größer und führt zu Ungenauigkeiten.

Darüber hinaus sind aus der DE-OS 27 01 436 und der JP-A-54 148 544 losbare Verbindungsvorrichtungen für Lichtwellenleiter bekannt, die das gleiche Spannprinzip verwenden, jedoch im konstruktiven Detail voneinander abweichen.

Gegenüber der erstgenannten Lösung ist in den letzteren die Spannhülse jeweils mit einem axial gerichteten, durchgehenden Schlitz versehen; die Spannkräfte werden hier ebenfalls durch Schraubverbindungen erzeugt, die wiederum eine große Dimensionierung des Außendurchmessers der Verbindungsvorrichtung sowie eine große Anzahl von Bauteilen erfordern.
Von Nachteil ist weiterhin die unterschiedlich stark wirkende Spannkraft, wobei die Spannhülse an jedem Umfangspunkt anders auf das in ihr befindliche zylindrische, die Lichtwellenleiter aufnehmende Teil einwirkt.

Die Aufgabe der vorliegenden Erfindung besteht deshalb auch darin, mit wesentlich weniger baulichem und fertigungstechnischen Aufwand eine noch exaktere Paßgenauigkeit, d.h. Verringerung des radialen Versatzes, bei Steckverbindern der hier zur Rede stehenden Art und damit auch erheblich bessere und kostengünstigere Steckverbinder für Lichtwellenleiter zu schaffen. Gelöst wird diese Aufgabe durch die in den Patentansprüchen angegebenen Merkmale.

Anhand eines Ausführungsbeispieles wird die Erfindung in Verbindung mit der Zeichnung im folgenden näher erläutert.

Es zeigen:
- Fig. 1: den erfindungsgemäßen Steckverbinder in zusammengebautem Zustand im Längsschnitt,

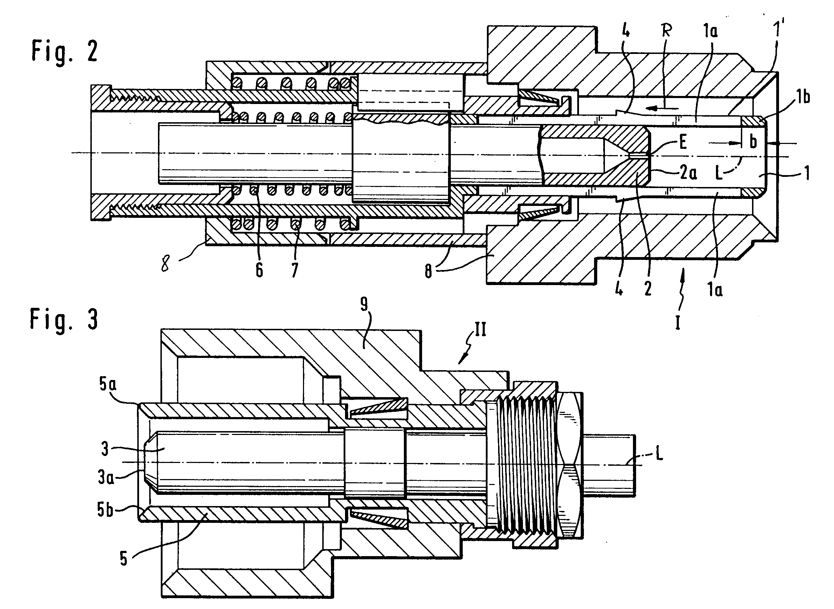

- Fig. 2: den Steckerteil des Steckverbinders als Einzelheit und
- Fig. 3: den korrespondierenden Buchsenteil dazu, beides ebenfalls im Längsschnitt.

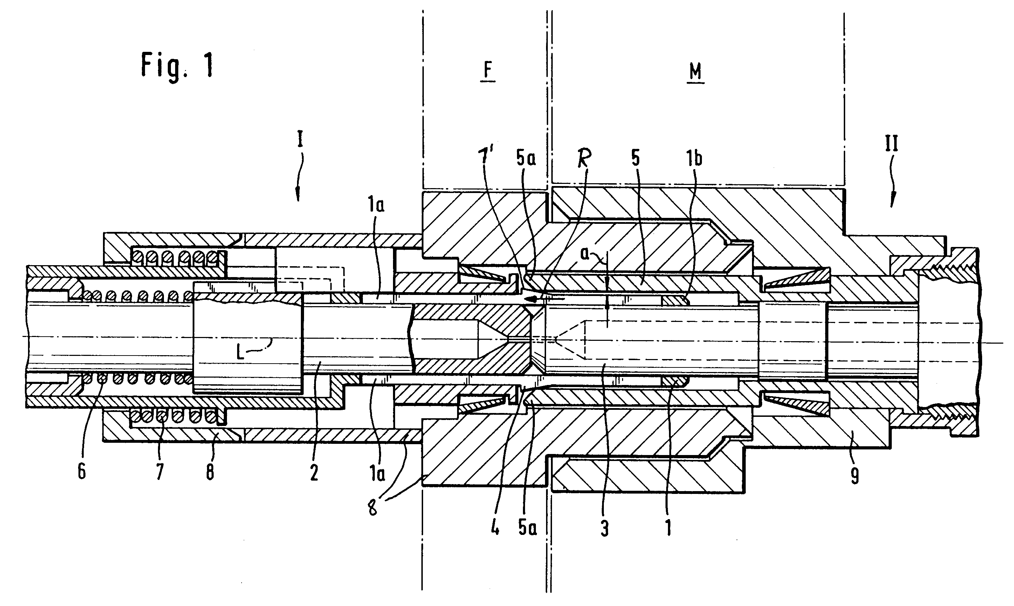

In dem dargestellten Beispiel besteht der Steckverbinder aus zwei Hälften, die als sog. Steckerteil I und Buchsenteil II neben anderen Verbindungselementen in eine Feder- und Messerleiste F und M eingebaut sind. Um nun den unerwünschten, radialen Versatz der Faserleitungsenden E innerhalb der Steckverbinder I, II praktisch gleich null zu machen, und zwar auf einfache Weise sowie bei größeren Fertigungstoleranzen, ist als neu gemäß Fig. 1 nunmehr vorgesehen, daß der Außenmantel 1' der in einer (8) der Steckverbinderhälften sitzenden, längsgeschlitzten Zentrierhülse 1 zylindrisch und mit einem in zusammengestecktem Zustand im Bereich der aufeinandertreffenden Stirnflächen 2a, 3a der Steckerstifte 2, 3 angeordneten, in Richtung R des rückwärtigen Teils der zugehörigen Steckverbinderhälfte ansteigenden Spannkonus 4 versehen ist, wobei die besagten Längsschlitze 1a im Abstand b vom vorderen freien Hülsenende 1b beginnend in Richtung Spannkonus 4 verlaufen, sowie ihre jeweilige Länge vorzugsweise der doppelten Entfernung des Spannkonus 4 bis zum Abstand b beträgt, ohne jedoch das dem vorderen freien Hülsenende 1b gegenüberliegende rückwärtige Ende der Zentrierhülse 1 zu durchtrennen und beim Steckvorgang nach erfolgter gegenseitiger Anlage der Steckerstift-Stirnflächen 2a, 3a eine in der anderen Steckverbinderhälfte 9 befindliche, außen wie innen zylindrische Spannhülse 5 einen großen, vom vorderen freien Ende 1b bis zum Spannkonus 4 reichenden Teilbereich der längsgeschlitzten Zentrierhülse 1, 1a allseits mit radialem Spiel a umgreift, und wobei eine an dem vorderen freien Ende 5a der Spannhülse vorgesehene, mit dem Spannkonus 4 korrespondierende, nach innen gerichtete Auflaufschräge 5b den Spannkonus 4 zumindest teilweise umschließt. Hierdurch wird ein sicheres und störungsfreies Eingreifen der einzelnen Steckverbinderteile ineinander gewährleistet, wozu es baulich zudem noch dienlich ist, daß Zentrierhülse 1 und Spannkonus 4 durch entsprechende mechanische Bearbeitung einstückig ausgebildet sind.

Während des Steckvorgangs in Längsrichtung L wird also der Spannkonus 4 von der Spannhülse 5 umfaßt und zusammengedrückt, wodurch das zuvor vorhandene Spiel zwischen den Steckerstiften 2 und 3 und der Führungshülse 1 praktisch zu Null wird. In spezieller baulicher Ausgestaltung dieser neuen Bauweise ist dabei vorgesehen, daß die längsgeschlitzte, zylindrische Zentrierhülse 1, 1a mitsamt dem Spannkonus 4 und dem über eine Feder 6 abgestützten, darin axial verschieblich geführten Steckerstift 2 in einer der Steckverbinderhälften 8 und die Spannhülse 5 mitsamt dem ungefederten, starren Steckerstift 3 in der anderen Steckverbinderhälfte 9 sitzt, wobei die längsgeschlitzte Zentrierhülse 1, 1a im zugehörigen Steckergehäuse 8 ebenfalls in axialer Richtung über eine Teilstrecke beweglich durch eine weitere Feder 7 abgestützt ist.

Diese Federn 6 und 7 bewirken dabei in dem dargestellten Beispiel einerseits einen definierten gegenseitigen Anpreßdruck der Stirnflächen 2a, 3a der die Faserleitungsenden E haltenden Steckerstifte 2, 3 und erbringen zugleich als Differenzdruck die erforderliche Kraft zum Zusammenpressen der durch die Längsschlitzung 10 verbleibenden Stege oder Lamellen an der Zentrierhülse 1.

## Patentansprüche

1. Zweiteiliger Steckverbinder (8, 9) für Lichtwellenleiter mit Mitteln zum selbsttätigen, axialen Ausrichten von zwei die Enden (E) der Lichtwellenleiter haltenden, zylindrischen Steckerstiften (2, 3) in einer mit Längsschlitzen versehenen, innen zylindrischen Zentrierhülse, wobei einer der Steckerstifte in Gehäuselängsrichtung (L) federnd gelagert ist,
wobei der Außenmantel (1') der in einer der Steckverbinderhälften (8) sitzenden, längsgeschlitzten Zentrierhülse (1) zylindrisch und mit einem in zusammengestecktem Zustand (Fig. 1) im Bereich der aufeinandertreffenden Stirnflächen (2a, 3a) der Steckerstifte (2, 3) angeordneten, in Richtung (R) des rückwärtigen Teils der zugehörigen Steckverbinderhälfte ansteigenden Spannkonus (4) versehen ist,
wobei die besagten Längsschlitze (1a) im Abstand (b) vom vorderen freien Hülsenende (1b) beginnend in Richtung Spannkonus (4) verlaufen, sowie ihre jeweilige Länge vorzugsweise der doppelten Entfernung des Spannkonus (4) bis zum Abstand (b) entspricht, ohne jedoch das dem vorderen freien Hülsenende (1b) gegenüberliegende, rückwärtige Ende der Zentrierhülse (1) zu durchtrennen,
wobei beim Steckvorgang nach erfolgter gegenseitiger Anlage der Steckerstift-Stirnflächen (2a, 3a) eine in der anderen Steckverbinderhälfte (9) befindliche, außen wie innen zylindrische Spannhülse (5) einen großen, vom vorderen freien Ende (1b) bis zum Spannkonus (4) reichenden Teilbereich der längsgeschlitzten Zentrierhülse (1, 1a) allseits mit radialem Spiel (a) umgreift, und
wobei eine an dem vorderen freien Ende (5a) der Spannhülse vorgesehene, mit dem Spannkonus (4) korrespondierende, nach innen gerichtete Auflaufschräge (5b) den Spannkonus (4) zumindest teilweise umschließt.

2. Steckverbinder nach Anspruch 1,
**dadurch gekennzeichnet,**
daß die längsgeschlitzte, zylindrische Zentrierhülse (1, 1a) mitsamt Spannkonus (4) und dem über eine Feder (6) abgestützten, darin axial verschieblich geführten Steckerstift (2) in einer der Steckverbinderhälften (8) und die Spannhülse mitsamt dem ungefederten, starren Steckerstift (3) in der anderen Steckverbinderhälfte (9) sitzt.

3. Steckverbinder nach den Ansprüchen 1 und 2,
**dadurch gekennzeichnet,**
daß die längsgeschlitzte Zentrierhülse (1, 1a) im zugehörigen Steckergehäuse (8) ebenfalls in axialer Richtung über eine Teilstrecke beweglich durch eine weitere Feder (7) abgestützt ist.

4. Steckverbinder nach einem der vorhergehenden Ansprüche,
**dadurch gekennzeichnet,**
daß die Zentrierhülse (1) und Spannkonus (4) durch entsprechende mechanische Bearbeitung einstückig ausgebildet sind.

## Claims

1. Two-piece plug connector (8, 9) for optical waveguides, with means for automatic axial alignment of two cylindrical plug pins (2, 3), which hold the ends (E) of the optical conductor, in an internally cylindrical centring sleeve provided with longitudinal slots, wherein one of the plug pins is resiliently mounted in longitudinal direction (L) of the housing, wherein the outer casing (1') of the longitudinally slotted centring sleeve (1), which is seated in one of the plug connector halves (8), is cylindrical and is provided with a clamping cone (4) which in the plugged-together state (Fig. 1) is arranged in the region of the meeting end faces (2a, 3a) of the plug pins (2, 3) and which enlarges in the direction (R) of the rearward part of the associated plug connector half, wherein the said longitudinal slots (1a), starting at a spacing (b) from the forward free sleeve end (1b), extend in the direction of the clamping cone (4) and the respective length thereof preferably corresponds to twice the distance of the clamping cone (4) from the spacing (b), but without running through the rearward end, which is opposite the forward free sleeve end (1b), of the centring sleeve (1), wherein in the plugging process and after mutual contact of the plug pin end faces (2a, 3a) has been attained, an externally and internally cylindrical clamping sleeve (5) disposed in the other plug connector half (9) engages, with radial play (a) at all sides, around a large partial region, which reaches from the forward free end (1b) to the clamping cone (4), of the longitudinally slotted centring sleeve (1, 1a), and wherein an inwardly directed run-up chamfer (5b), which is provided at the forward free end (5a) of the clamping sleeve and corresponds with the clamping cone (4), at least partly encloses the clamping cone (4).

2. Plug connector according to claim 1, characterised thereby that the longitudinally slotted cylindrical centring sleeve (1, 1a) together with the clamping cone (4) and the plug pin (2) guided to be axially displaceable therein and supported by way of a spring (6) is seated in one of the plug connector halves (8) and the clamping sleeve together with the unsprung rigid plug pin (3) is seated in the other plug connector half (9).

3. Plug connector according to claims 1 and 2, characterised thereby that the longitudinally slotted centring sleeve (1, 1a) is similarly supported in the associated plug housing (8) by a further spring (7) to be movable in axial direction over a partial path.

4. Plug connector according to one of the preceding claims, characterised thereby that the centring sleeve (1) and clamping cone (4) are integrally formed by appropriate mechanical working.

## Revendications

1. Connecteur à enfichage en deux parties (8, 9) pour fibres optiques, comprenant des moyens pour l'alignement axial automatique de deux broches de connecteur cylindriques (2, 3), maintenant les extrémités (E) des fibres optiques, dans une douille de centrage intérieurement cylindrique et pourvue de fentes longitudinales, dans lequel l'une des broches de connecteur est supportée élastiquement dans le sens de la longueur du corps de connecteur (L),
dans lequel la surface latérale extérieure (1') de la douille de centrage (1), fendue longitudinalement et située dans un demi-connecteur (8), est cylindrique et pourvue d'un cône de serrage (4) disposé dans la zone des faces d'extrémité (2a, 3a) s'appliquant l'une contre l'autre des broches de connecteur (2, 3) à l'état assemblé par enfichage (figure 1), cône qui monte en direction (R) de la partie arrière du demi-connecteur correspondant,
dans lequel lesdites fentes longitudinales (1a) commencent à distance (b) de l'extrémité avant libre (1b) de la douille et s'étendent en direction du cône de serrage (4), la longueur de chacune des fentes correspondant de préférence au double de la distance séparant le cône de serrage (4) de la distance (b), mais sans que soit coupée l'extrémité arrière de la douille de centrage (1), située à l'opposé de l'extrémité avant libre (1b) de la douille,
dans lequel, lors de l'enfichage, après que les faces d'extrémité (2a, 3a) des broches de connecteur sont venues s'appliquer l'une contre l'autre, une douille de serrage (5), se trouvant dans l'autre demi-connecteur (9) et qui est extérieurement et intérieurement cylindrique, entoure de tous côtés, avec du jeu radial (a), une grande partie de la douille de centrage (1, 1a) fendue longitudinalement, partie qui s'étend de l'extrémité avant libre (1b) jusqu'au cône de serrage (4), et
dans lequel une rampe (5b) dirigée vers l'intérieur, prévue à l'extrémité avant libre (5a) de la douille de serrage et correspondant au cône de serrage (4), entoure ce cône (4) en partie au moins.

2. Connecteur à enfichage selon la revendication 1, caractérisé en ce que la douille de centrage cylindrique (1, 1a), fendue longitudinalement, y compris le cône de serrage (4), et la broche de connecteur (2) appuyée par l'intermédiaire d'un ressort (6) et qui est axialement mobile et guidée dans cette douille de centrage, sont situés dans l'un (8) des demi-connecteurs, et la douille de serrage de même que la broche de connecteur (3) rigide, non appuyée par l'intermédiaire d'un ressort, sont situées dans l'autre demi-connecteur (9).

3. Connecteur à enfichage selon les revendications 1 et 2, caractérisé en ce que la douille de centrage (1, 1a), fendue longitudinalement, est également disposée mobile en direction axiale, de façon limitée, en étant appuyée par un ressort (7) supplémentaire, dans le corps de connecteur (8) correspondant.

4. Connecteur à enfichage selon une des revendications précédentes, caractérisé en ce que la douille de centrage (1) et le cône de serrage (4) sont réalisés d'un seul tenant par un usinage mécanique approprié.
